(19) Europäisches Patentamt / European Patent Office / Office européen des brevets

(11) **EP 2 735 931 B1**

(12) **FASCICULE DE BREVET EUROPEEN**

(45) Date de publication et mention de la délivrance du brevet:
**16.01.2019   Bulletin 2019/03**

(51) Int Cl.:
*G08G 5/02* *(2006.01)*    *G08G 5/00* *(2006.01)*
*G05D 1/06* *(2006.01)*    *G05D 1/00* *(2006.01)*

(21) Numéro de dépôt: **13193875.5**

(22) Date de dépôt: **21.11.2013**

(54) **Procédé de détermination dynamique de la position du point d'arrêt d'un aéronef sur un terrain, et système associé**

Verfahren und System zur dynamischen Bestimmen des Haltepunktes auf dem Boden von einem Flugzeug

Method and system for dynamically determing the stopping point on ground of an aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.11.2012   FR 1203197**

(43) Date de publication de la demande:
**28.05.2014   Bulletin 2014/22**

(73) Titulaire: **Dassault Aviation**
**75008 Paris (FR)**

(72) Inventeurs:
• **Le Corre, Nicolas**
  **75015 PARIS (FR)**
• **Lepage, Sébastien**
  **92400 COURBEVOIE (FR)**
• **Boucher, Alain**
  **78810 FEUCHEROLLES (FR)**

(74) Mandataire: **Lavoix**
**2, place d'Estienne d'Orves**
**75441 Paris Cedex 09 (FR)**

(56) Documents cités:
FR-A1- 2 897 593        FR-A1- 2 903 801
FR-A1- 2 906 066        FR-A1- 2 914 770
US-A1- 2001 052 562

**EP 2 735 931 B1**

**Description**

La présente invention concerne un procédé de détermination dynamique de la position du point d'arrêt d'un aéronef sur un terrain selon le préambule de la revendication 1.

Un tel procédé est destiné à être mis en oeuvre, lors de l'approche de l'aéronef vers un terrain (par exemple une piste d'atterrissage) et lors de l'atterrissage sur ce terrain.

La phase d'atterrissage d'un aéronef est une phase critique du vol. En effet, lors de cette phase, le pilote doit parvenir à arrêter l'aéronef sur la piste, ou doit engager une procédure spécifique d'urgence, s'il estime qu'il ne sera pas en mesure d'arrêter l'aéronef avant l'extrémité de la piste. La procédure spécifique est par exemple une procédure de remise des gaz si la vitesse de l'avion et la longueur de piste restante l'y autorise.

À cet égard, les études statistiques des accidents aériens survenus durant la dernière décennie sur des vols commerciaux montrent qu'une majorité des accidents ont lieu lors de l'atterrissage, et qu'environ 18 % des accidents ont pour cause principale une sortie de piste.

Une part importante de ces accidents est due, lors de la phase d'atterrissage, à des sorties de pistes en longueur. Plusieurs causes sont isolées pour ce type d'accidents, mais dans la majeure partie des cas, l'équipage avait mal estimé la capacité à faire atterrir l'aéronef sur la piste.

Pour pallier ce problème, des systèmes et des procédés ont été développés pour permettre au pilote, lorsqu'il est en vol et/ou au sol, d'estimer s'il sera en mesure de poser l'aéronef en toute sécurité, et d'estimer les capacités de freinage de son avion sur la piste considérée.

L'estimation de la position d'arrêt de l'avion, présentée à l'équipage durant l'approche et jusqu'à l'arrêt complet de l'aéronef, est donc une information qui présente un fort intérêt en terme de sécurité. Cet intérêt est renforcé si l'estimation tient compte de l'évolution de la situation en temps réel.

Dans un procédé connu, une distance minimale d'atterrissage le long d'une piste, jusqu'à l'arrêt de l'aéronef est calculée à partir de la position courante de l'aéronef, d'un plan de descente standard vers la piste d'atterrissage déterminée, et d'un modèle de performance de l'aéronef.

Le calcul de la distance minimale d'atterrissage comprend l'estimation d'une distance parcourue au-dessus de la piste en vol, fondée sur un temps moyen de vol au-dessus de la piste, et l'estimation d'une distance de roulage sur la piste.

Ce procédé considère uniquement le plan de descente constant de l'aéronef.

FR 2 903 801 et FR 2 897 593 décrivent des procédés de détermination de la position du point d'arrêt sur une piste d'atterrissage en référence à cette piste. US 2001/0052562 décrit un procédé de détermination d'une décélération nécessaire pour arrêter l'aéronef sur une piste.

Un but de l'invention est donc d'obtenir un procédé de détermination du point d'arrêt d'un aéronef au sol, pouvant être mis en oeuvre lors d'une phase d'approche et lors du roulage, et dont la précision est améliorée.

À cet effet, l'invention a pour objet un procédé selon la revendication 1.

Le procédé selon l'invention peut comprendre l'une ou plusieurs des caractéristiques des revendications 2 à 11.

L'invention a également pour objet un système de détermination dynamique de la position du point d'arrêt d'un aéronef sur un terrain, selon la revendication 12 ou 13.

L'invention sera mieux comprise à la lecture de la description qui va suivre, donnée uniquement à titre d'exemple, et faite en se référant aux dessins annexés, sur lesquels :

- la figure 1 est une vue schématique d'un aéronef comportant un système destiné à la mise en oeuvre du procédé selon l'invention ;
- la figure 2 est une vue dans le plan de la trajectoire de l'aéronef lors de son approche vers le sol, avec l'aéronef représenté dans sa phase d'approche avant le début de l'arrondi, pour illustrer un premier mode de réalisation du procédé selon l'invention ;
- la figure 3 est une vue analogue à la figure 2, lorsque l'aéronef amorce une phase d'arrondi ;

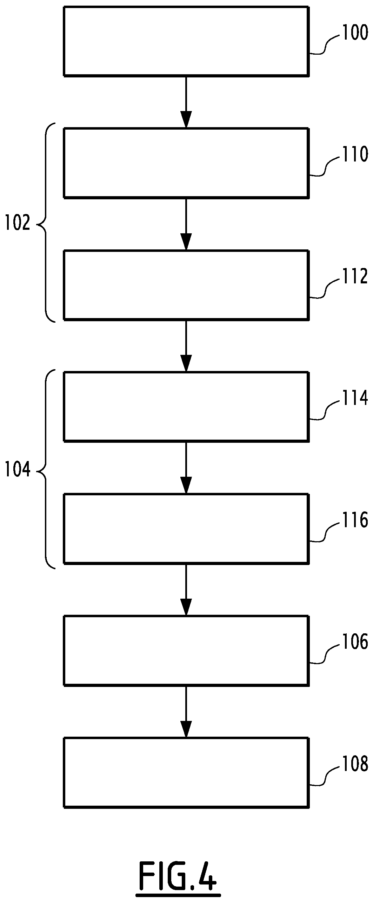

- la figure 4 est un logigramme représentant les différentes étapes du procédé selon l'invention ;
- la figure 5 est une vue analogue à la figure 2, pour un deuxième mode de réalisation du procédé selon l'invention ; et
- la figure 6 est une vue analogue à la figure 3 pour le deuxième mode de réalisation du procédé selon l'invention.

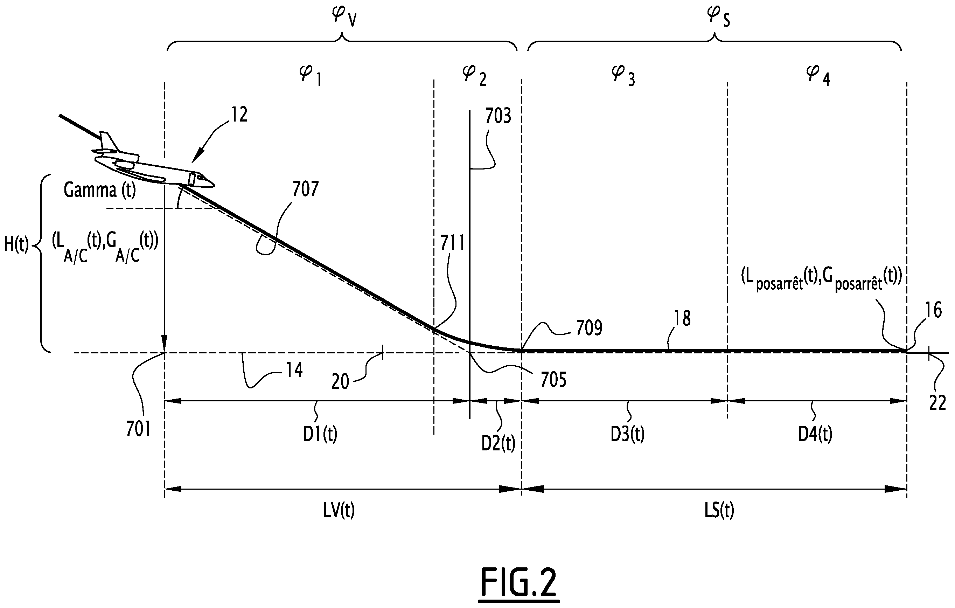

Sur la Figure 2, l'évolution d'un aéronef 12 entre une position courante en vol et une position d'arrêt 16 sur un terrain 14 comporte une phase en vol $\varphi_V$ tant que l'aéronef 12 est en sustentation et jusqu'à son toucher des roues sur le sol et une phase au sol $\varphi_s$, du toucher des roues sur le sol jusqu'à l'arrêt complet de l'aéronef 12.

La phase en vol $\varphi_V$ comporte une première phase $\varphi_1$ dans laquelle l'aéronef 12 s'approche du terrain 14 selon une première trajectoire, par exemple une trajectoire rectiligne à pente constante puis une deuxième phase $\varphi_2$ dite d'arrondi, au cours de laquelle le pilote réalise la transition entre la phase de sustentation et la phase au sol en réduisant la pente de l'aéronef 12 pour diminuer sa vitesse verticale et assurer le confort passager durant cette transition.

La phase au sol $\varphi_s$ comporte une première phase $\varphi_3$ au cours de laquelle la décélération de l'aéronef 12 varie jusqu'à atteindre une valeur correspondant au freinage maximum (par exemple une valeur constante) puis une deuxième phase $\varphi_4$ au cours de laquelle la décélération de l'aéronef 12 est la décélération associée au freinage maximum, jusqu'à l'arrêt complet de celui-ci à sa position d'arrêt 16.

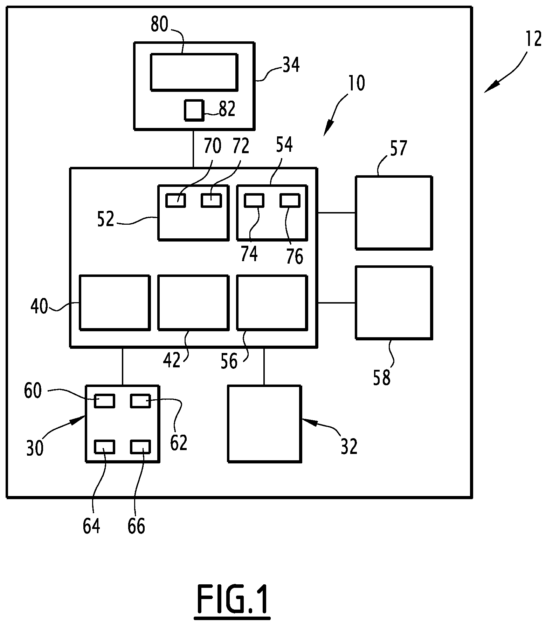

Un premier système 10 de détermination dynamique de la position du point d'arrêt d'un aéronef 12 selon l'invention est illustré schématiquement par la figure 1.

En référence à la figure 2, le système 10 est destiné à déterminer, à tout instant t pendant l'atterrissage de l'aéronef 12, vers le terrain 14, la position géographique du point d'arrêt 16 de l'aéronef 12 sur le terrain 14.

Comme on le verra plus bas, la position géographique du point d'arrêt 16 est déterminée par ses coordonnées géographiques, par exemple par sa latitude $L_{Pos\ Arrêt}$ (t) et sa longitude $G_{Pos\ Arrêt}$ (t). Cette détermination est faite avantageusement indépendamment de la position d'une piste d'atterrissage 18 représentée schématiquement sur la figure 2, la piste d'atterrissage 18 présentant un seuil amont 20 et un seuil aval 22.

Le système 10 est destiné à fournir, en temps réel, à l'équipage de l'aéronef 12 une indication sur la position estimée du point d'arrêt 16, en fonction des paramètres courants de vol de l'aéronef 12, et notamment de sa position courante ($L_{A/C}$(t) $G_{A/C}$(t)), de sa décélération longitudinale courante par rapport au sol $J_x$(t), de sa vitesse sol courante $V_{sol}$(t), de sa pente sol courante gamma(t), et de sa hauteur courante H(t) par rapport au terrain 14.

Outre le système 10, l'aéronef 12 comporte, en référence à la figure 1, un système 30 de mesure et de positionnement, et un système 32 de surveillance de pannes des systèmes avion. Il comprend en outre un dispositif d'affichage 34 d'informations relatives au point d'arrêt 16 de l'aéronef 12 sur le terrain 14.

Le système 30 de mesure et de positionnement comporte par exemple des capteurs de mesure de paramètres liés à l'aéronef et à son environnement, tels que la température, la pression ou la vitesse, sa position, son altitude et ses attitudes.

Le système 32 est propre à surveiller et à déterminer notamment l'état actuel des systèmes de l'aéronef 12 (notamment les systèmes de freinage), tenant compte des pannes sur ces systèmes.

Le système de détermination 10 est raccordé au système de mesure et de positionnement 30 et au système de surveillance 32. Il comporte au moins un processeur 40 et une mémoire 42.

Selon l'invention, le système 10 comprend un premier ensemble 52 de calcul d'une première longueur LV(t) représentative de la phase de vol $\varphi_v$ de l'aéronef 12 et un deuxième ensemble 54 de calcul d'une deuxième longueur LS(t) représentative de la phase au sol $\varphi_s$ de l'aéronef 12.

Le système 10 comporte en outre un troisième ensemble 56 de calcul du point d'arrêt 16, sur la base de la première longueur LV(t), de la deuxième longueur LS(t), et d'au moins la position géographique courante de l'aéronef 12.

Le système 10 est raccordé à une base de données topographique 57 et à une base de données 58 de performances de l'aéronef 12.

La base de données 57 comporte des données topographiques relatives au terrain 14 en regard duquel évolue l'aéronef 12. Elle comporte avantageusement des informations relatives aux pistes d'atterrissage 18 présentes sur le terrain 14, et notamment relatives à la position géographique du seuil 20, 22 de chaque piste 18.

La base de données de performances 58 comporte des tables relatives aux paramètres de performances de l'aéronef 12 lors de son arrondi (facteurs de charge $n_{zarr}$) et lors de son freinage au sol.

Dans un mode de réalisation particulier, le facteur de charge $n_{zarr}$ est considéré constant lors de l'arrondi.

Elle comporte en outre une table de données de performance de freinage établissant l'évolution de la décélération $J_{x\ tab}$ de l'aéronef 12 en fonction de sa vitesse sol courante $V_{sol}$(t). Cette évolution est également dépendante de la configuration de l'aéronef (notamment de la position des volets), des performances de freinage de l'aéronef 12, et éventuellement, de l'état de la piste (piste mouillée, piste sèche, piste contaminée)..

Dans un mode de réalisation particulier, cette décélération $J_{x\ tab}$ est supposée constante en fonction du temps et égale à la décélération constante $J_{x\ max}$ correspondant au freinage maximal de l'aéronef 12.

La décélération correspondant au freinage maximal de l'aéronef $J_{x\ max}$ est fonction de la configuration de l'aéronef 12, des performances de freinage de l'aéronef 12, et de l'état de la piste (piste mouillée, piste sèche, piste contaminée).

La base de données de performances 58 comprend en outre une table de données de constantes $K_{ms}$ représentant la dynamique de l'aéronef 12 entre le toucher du train principal d'atterrissage et l'établissement du freinage maximal.

Le système de positionnement et de mesure 30 comporte un premier ensemble 60 de mesure dynamique de la position géographique courante ($L_{A/C}$(t) ; $G_{A/C}$(t) ; H(t)) de l'aéronef 12, un deuxième ensemble 62 de mesure de la vitesse sol $V_{sol}$(t) courante de l'aéronef 12, et un troisième ensemble 64 de mesure de la pente courante gamma(t) de l'aéronef 12. Il comporte en outre un quatrième ensemble 66 de mesure de la décélération courante $J_x$(t) de l'aéronef 12.

Le premier ensemble 60 est raccordé aux capteurs de position. Il est apte à déterminer dynamiquement, sur la base des données reçues des capteurs de position, et sur la base d'informations reçues de la base de données géographique 57, la position courante de l'aéronef, à savoir sa latitude $L_{A/C}$(t), sa longitude $G_{A/C}$(t), et sa hauteur H(t) par rapport au terrain 14.

Le deuxième ensemble 62 est également raccordé aux capteurs. Il est apte à déterminer dynamiquement la vitesse sol courante $V_{sol}(t)$ de l'aéronef.

Le troisième ensemble 64 est raccordé à des capteurs de position. Il est apte à déterminer dynamiquement, sur la base des données reçues des capteurs, la pente sol avion gamma(t).

Le quatrième ensemble 66 est aussi raccordé aux capteurs. Il est apte à déterminer dynamiquement la décélération courante $J_x(t)$ de l'aéronef 12.

Le premier ensemble de calcul 52 est raccordé aux ensembles de mesure 60 à 66.

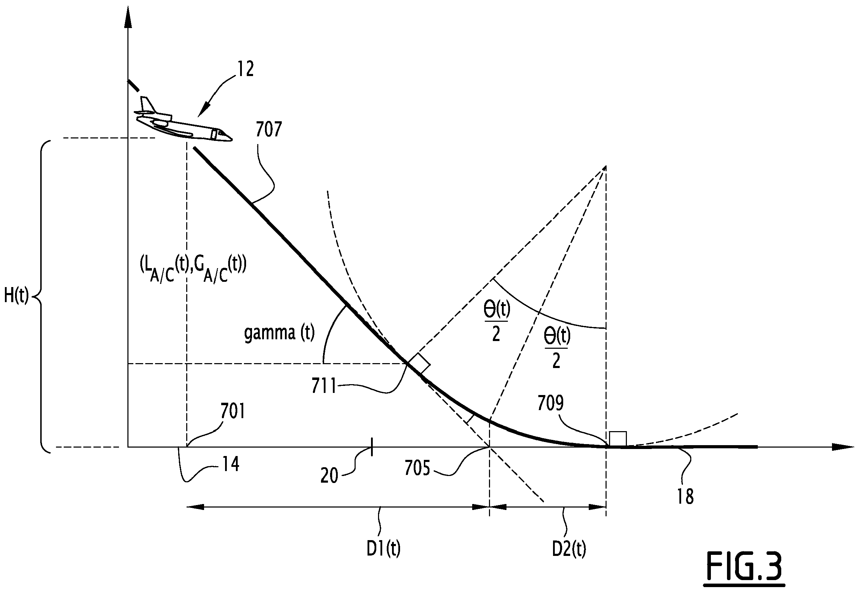

Dans un premier mode de réalisation illustré sur les figures 2 et 3, il comporte des moyens d'estimation 70 d'une première distance D1(t) correspondant à la distance séparant la projection 701 sur le terrain 14 de l'aéronef 12 en vol, et le plan vertical 703 passant par l'intersection 705 du plan de descente courant 707 avec le terrain 14. Il comporte en outre des moyens 72 d'estimation d'une deuxième distance D2(t) correspondant à la distance séparant le plan vertical 703 du point de toucher des roues 709 de l'aéronef sur le terrain 14.

Dans ce mode de réalisation, et par rapport à une trajectoire supposée de l'aéronef 12, tant que l'aéronef 12 n'a pas démarré la phase d'arrondi $\varphi_2$, la distance D1(t) est représentative de la phase d'approche $\varphi_1$ et d'une première partie de la phase d'arrondi $\varphi_2$ tandis que la distance D2(t) est représentative de la seconde partie de la phase d'arrondi $\varphi_2$.

Une fois que l'aéronef 12 a amorcé la phase d'arrondi $\varphi_2$, la distance D1(t) est représentative de la première partie de la phase d'arrondi $\varphi_2$ tandis que la distance D2(t) est représentative de la seconde partie de la phase d'arrondi $\varphi_2$.

Dans un mode de réalisation particulier, le procédé selon l'invention consiste donc à assimiler D2(t) à la projection d'un demi arc de cercle $\theta(t)$ / 2 de l'arrondi, l'arrondi étant supposé s'effectuer suivant une trajectoire circulaire.

$\theta(t)$ et gamma(t) sont liés par la relation géométrique suivante :

$$\theta(t) = \text{gamma}(t) - \beta \; ;$$

$\beta$ corresponsant à la pente de la piste 18 ($\beta$ étant égal à 0 pour une piste horizontale).

Les premiers moyens d'estimation 70 sont propres à calculer dynamiquement la distance D1(t) en fonction de la hauteur courante H(t) de l'aéronef 12 et de sa pente courante gamma(t), par exemple par l'équation (1) ci-dessous :

$$D1(t) = \frac{H(t)}{\tan[\text{gamma}(t)]} \quad (1)$$

En particulier, lorsque la pente courante est faible, l'équation (2) ci-dessous peut être réécrite sous la forme :

$$D1(t) = \frac{H(t)}{[\text{gamma}(t)]} \quad (2)$$

Lorsque la pente courante est très proche de zéro, gamma(t) est alors bornée à une valeur seuil $\text{gamma}_{min}$.

Les deuxième moyens d'estimation 72 sont propres à calculer dynamiquement la distance D2(t) en fonction de la vitesse sol courante $V_{sol}(t)$, de la pente avion courante gamma(t), et du facteur de charge $n_{zarr}$ de l'aéronef 12, obtenu à partir de la base de données de performances 58 et de l'accélération de la pesanteur g, par exemple par l'équation (3) ci-dessous :

$$D2(t) = \int_0^{\frac{\text{gamma}(t)-\beta}{2}} \left[ \frac{1}{g \times (n_{zarr} - \cos(\gamma))} \times V_{sol}^2(t) \times \cos\left(\gamma + \frac{d\gamma}{2}\right) \right] \cdot d\gamma \qquad (3)$$

En particulier, lorsque l'arrondi est supposé être circulaire, le facteur de charge $n_{zarr}$ est constant. Avec l'hypothèse des petits angles, l'équation (3) peut être simplifiée sous la forme de l'équation suivante (4) :

$$D2(t) = \frac{1}{2 \times g \times (n_{zarr} - 1)} \times V_{sol}^2(t) \times (\text{gamma}(t) - \beta) \, (4)$$

La prise en compte effective de l'arrondi offre ainsi une plus grande précision dans l'estimation de la position d'arrêt de l'aéronef que celles des procédés d'estimation de l'art antérieur.

Le deuxième ensemble de calcul 54 comporte des troisièmes moyens d'estimation 74 de la distance D3(t) nécessaire au passage, dans la phase de freinage au sol, de la décélération courante $J_x(t)$ à la décélération correspondant à un freinage établi, notamment au freinage maximal $J_{x\,frmax}$. Le deuxième ensemble de calcul 54 comporte en outre des quatrièmes moyens d'estimation 76 de la distance D4(t) parcourue au sol par l'aéronef 12 en freinage établi.

Les troisièmes moyens d'estimation 74 sont aptes à calculer dynamiquement la distance D3(t) en fonction de la décélération correspondant à un freinage établi, notamment au freinage maximal $J_{x\,frmax}$, de la décélération courante $J_x(t)$, et d'une constante $K_{ms}$ représentant la dynamique de l'aéronef 12 entre le toucher du train d'atterrissage principal et l'établissement du freinage établi, tels qu'obtenue à partir de la base de données de performances 58.

En particulier, la distance D3(t) est estimée par l'équation (5) suivante :

$$D3(t) = K_{ms} \times \left( J_{x\,fr\,max} - J_x(t) \right) \quad (5)$$

Les quatrièmes moyens d'estimation 74 sont aptes à calculer dynamiquement la distance D4(t) en fonction du profil estimé $J_{x\,tab}$ de décélération de l'aéronef 12 sur le sol, tel qu'il est tabulé dans la base de données de performances 58.

Ce profil estimé $J_{x\,tab}$ est tabulé en fonction de la vitesse sol courante $V_{sol}(t)$.

La distance D4(t) est obtenue dynamiquement par une intégration de la fonction correspondant à ce profil $J_{x\,tab}$ entre l'instant courant t et le temps d'arrêt $t_{arrêt}$ de l'aéronef 12.

Les moyens 74 comprennent, à cet effet, des moyens de calcul du temps d'arrêt $t_{arrêt}$ de l'aéronef. Ce temps d'arrêt $t_{arrêt}$ est estimé à l'aide du profil de décélération tabulé $J_x(V_{sol}(t),t)$ correspondant à la vitesse sol courante $V_{sol}(t)$. Il est par exemple obtenu par le système d'équations (6) suivant :

$$\begin{cases} t_{arrêt} > 0 \\ \int_{t}^{t\,arrêt} J_{x\_tab}\left(V_{sol}(t),t\right) \cdot dt = 0 \end{cases} \quad (6)$$

Dans le cas où le profil de décélération est constant, et est par exemple égal à la décélération correspondant au freinage maximal $J_{x\,frmax}$, le temps d'arrêt $t_{arrêt}$ est obtenu par l'équation (7) suivante :

$$t_{arrêt} = -\frac{V_{sol}(t)}{J_{x\,fr\,max}} \quad (7)$$

La distance D4 est alors obtenue par l'équation (8) suivante :

$$D4(t) = \int_{t}^{tarrêt} \left[ \int_{t}^{tarrêt} J_{x\_tab}(V_{sol}(t),t) \cdot dt \right] \cdot dt \quad (8)$$

Dans le cas où le profil de décélération est constant, et est par exemple égal à la décélération correspondant au freinage maximal $J_{x\,frmax}$, la distance D4(t) est calculée par l'équation (9) suivante :

$$D4(t) = -\frac{V_{sol}(t)^2}{2 \times J_{x\,fr\,max}} \quad (9)$$

L'estimation de la distance horizontale L(t) séparant la projection au sol V de la position actuelle de l'aéronef de sa position d'arrêt estimée s'exprime ainsi :

$$L(t) = LV(t) + LS(t) = D1(t) + D2(t) + D3(t) + D4(t) \quad (10)$$

Le troisième ensemble de calcul 56 est apte à calculer les coordonnées géographiques ($L_{pos\ arrêt}(t)$ ; $G_{pos\ arrêt}(t)$) du point d'arrêt 16, en fonction des coordonnées géographiques courantes de l'aéronef 12 ($L_{A/C}(t)$ ; $G_{A/C}(t)$), du relèvement $\chi$ (t), de l'estimation de la distance horizontale L(t) entre l'aéronef 12 et son point d'arrêt 16 et du rayon moyen terrestre R0, avec l'hypothèse d'une terre sphérique.

Le relèvement $\chi$ (t) est l'angle formé dans le plan horizontal par la ligne d'un observateur vers un objet par rapport au nord géographique.

Il est avantageusement pris égal à la route sol avion, c'est-à-dire l'angle formé par le vecteur vitesse sol de l'avion avec le nord géographique..

La formule suivante est avantageusement utilisée pour calculer les coordonnées géographiques ($L_{pos\ arrêt}(t)$ ; $G_{pos\ arrêt}(t)$) :

$$
\begin{bmatrix} L_{PosArret}(t) \\ G_{PosArret}(t) \end{bmatrix} = \begin{bmatrix} \mathrm{Arc\,sin}\left[ \sin\left(\dfrac{L(t)}{R0}\right) \times \cos(L_{AC}(t)) \times \cos(\chi(t)) + \sin(L_{AC}(t)) \times \cos\left(\dfrac{L(t)}{R0}\right) \right] \\ G_{AC}(t) + \mathrm{Arc\,tan}\left[ \dfrac{\sin(\chi(t)) \times \sin\left(\dfrac{L(t)}{R0}\right)}{\cos\left(\dfrac{L(t)}{R0}\right) \times \cos(L_{AC}(t)) - \cos(\chi(t)) \times \sin(L_{AC}(t)) \times \sin\left(\dfrac{L(t)}{R0}\right)} \right] \end{bmatrix}
$$

$$(11)$$

Le dispositif d'affichage 34 est par exemple disposé dans le cockpit de l'aéronef 12. Il comporte généralement un afficheur 80, tel qu'un écran et un ensemble 82 de gestion de l'affichage sur l'afficheur 80. Il est raccordé au système 10, et notamment au troisième ensemble de calcul 56.

L'ensemble de gestion 82 est propre à extraire des informations reçues du système 10, et notamment la position du point d'arrêt 16 estimée dynamiquement par le système 10 pour permettre l'affichage d'une information représentative de ce point d'arrêt 16 sur l'afficheur 80. Cette information peut être un symbole, une ligne, une jauge.

L'information est par exemple affichée sur une représentation géographique du terrain 14 présent à l'avant de l'aéronef 12, et/ou sur une représentation d'une piste d'atterrissage 18 et de son environnement sur l'afficheur 80.

Un premier procédé de détermination dynamique de la position du point d'arrêt 16 d'un aéronef 12 sur un terrain 14 va maintenant être décrit, en regard de la figure 3.

Ce procédé est mis en oeuvre dans un système 10 selon l'invention, tel que décrit plus haut.

Le procédé selon l'invention comporte une étape 100 de mesure dynamique de paramètres courants de l'aéronef 12, une étape 102 de calcul d'une première longueur LV(t) représentative d'une phase de vol de l'aéronef 12, une étape 104 de calcul d'une deuxième longueur LS(t) représentative d'une phase au sol de l'aéronef 12, et une étape 106 de calcul de la position du point d'arrêt 16 sur la base de la première longueur LV, de la deuxième longueur LS(t) et de la position géographique courante de l'aéronef 12.

Le procédé comporte en outre avantageusement une étape 108 d'affichage d'une information représentative de la position du point d'arrêt 16 sur un afficheur 80 du dispositif d'affichage 34.

À l'étape 100, l'ensemble 60 de mesure dynamique de la position géographique courante mesure, sur la base des données reçues des capteurs de position, et sur la base des informations reçues de la base de données géographique 57, la position courante de l'aéronef, à savoir sa latitude $L_{A/C}(t)$, sa longitude $G_{A/C}(t)$, et sa hauteur H(t) par rapport au terrain 14.

L'ensemble 62 mesure dynamiquement la vitesse sol courante $V_{sol}(t)$ de l'aéronef 12. L'ensemble 64 détermine dynamiquement, la pente avion courante gamma(t).

Ainsi, à chaque instant t, la position géographique courante de l'aéronef 12, et sa pente courante gamma(t) sont mesurées.

L'étape 102 comporte une première phase 110 d'estimation d'une distance D1(t) parcourue lors de l'approche de l'aéronef 12 vers le terrain 14, et/ou lors d'une première partie de l'arrondi, en fonction de la pente courante mesurée gamma(t) de l'aéronef 12, et, selon l'invention, une deuxième phase 112 d'estimation d'une distance D2(t) parcourue lors d'une deuxième partie de l'arrondi de l'aéronef 12, au-dessus du terrain 14, en fonction de la pente courante gamma(t) de l'aéronef 12.

Lors de la phase 110, la distance D1(t) parcourue lors de l'approche de l'aéronef 12 vers le terrain 14, au-dessus du terrain 14, avant d'effectuer un arrondi, et/ou lors d'une première partie de l'arrondi, est calculée en fonction de la hauteur courante H(t) de l'aéronef 12, et de sa pente courante gamma(t) par les premiers moyens d'estimation 70.

Ce calcul est effectué par exemple par l'une des équations (1) ou (2) ci-dessus.

Puis, lors de la phase 112, la distance D2(t) parcourue en vol par l'aéronef, lors d'une deuxième partie de l'arrondi de l'aéronef 12 est calculée, par les deuxièmes moyens d'estimation 72, en fonction de la vitesse sol courante $V_{sol}(t)$, de la pente avion courante gamma(t), et du facteur de charge $n_{zarr}$ de l'aéronef 12 lors de l'arrondi, obtenu à partir de la base de données de performances 58, par exemple par l'une des équations (3) ou (4) ci-dessus.

La première longueur LV(t) correspond à la somme des distances D1(t) et D2(t) obtenues lors des phases 110, 112.

L'étape 104 comporte une troisième phase 114 de calcul de la distance D3(t) nécessaire au passage, dans la phase de freinage au sol, de la décélération courante $J_x(t)$ à la décélération correspondant à un freinage établi $J_{x\ max}$, en fonction d'une constante $K_{ms}$ représentant la dynamique de l'aéronef 12 entre le toucher du train d'atterrissage principal et l'établissement du freinage établi. Le calcul de la distance D3(t) est en outre effectué en fonction de la décélération courante $J_x(t)$, et de la décélération correspondant à un freinage établi $J_{x\ max}$.

Cette distance D3(t) est calculée par les troisièmes moyens d'estimation 74, en particulier par l'équation (5).

L'étape 104 comporte en outre une quatrième phase 116 de calcul d'une distance D4(t) de roulage en freinage établi, sur la base du profil estimé $J_x(V_{sol}(t),t)$ de décélération de l'aéronef 12 sur le terrain 14, et d'une détermination du temps d'arrêt $t_{arrêt}$ de l'aéronef 12.

À cet effet, un calcul du temps d'arrêt $t_{arrêt}$ de l'aéronef 12 est effectué par les moyens d'estimation 74, à l'aide de l'une des équations (6) ou (7). La distance D4(t) est obtenue par une intégration du profil estimé $J_x V_{sol}(t),t)$ de décélération de l'aéronef 12 sur le terrain 14, avantageusement par l'une des équations (8) ou (9).

La deuxième longueur LS(t) correspond à la somme des distances D3(t) et D4(t) obtenues lors des phases 114,116.

Lors de l'étape 106, le troisième ensemble de calcul 56 calcule les coordonnées géographiques $L_{pos\ arrêt}(t)$ ; $G_{pos\ arrêt}(t)$ du point d'arrêt 16, en fonction des coordonnées géographiques courantes $L_{A/C}$ ; $G_{A/C}(t)$ de l'aéronef 12, du relèvement $\chi(t)$ pris égal à la route avion, et de la distance horizontale L(t) entre l'aéronef 12 et le point d'arrêt 16, obtenue en effectuant la somme de la première longueur LV(t) et de la deuxième longueur LS(t) obtenues respectivement aux étapes 102 et 104.

Comme précisé plus haut, cette position est calculée par une formule classique, avec l'hypothèse d'une terre sphérique.

À l'étape 108, l'ensemble de gestion 82 du dispositif d'affichage 34 extrait les informations reçues du système 10, et notamment la position du point d'arrêt 16, et affiche en dynamique sur l'afficheur 80, une information représentative de la position de ce point d'arrêt 16, tel que décrite plus haut.

La mise en oeuvre du procédé selon l'invention améliore grandement la précision de l'estimation de la position du point d'arrêt 16 de l'aéronef 12 sur le terrain 14, en tenant compte, en temps réel, de l'évolution de l'aéronef 12. En particulier, l'utilisation de la pente avion à chaque instant améliore l'estimation de la distance D2(t) parcourue lors de l'arrondi de l'aéronef 12 et contribue à augmenter la précision de l'estimation.

Dans une variante, le système 10 comporte, en complément ou en remplacement du dispositif d'affichage 34, un dispositif d'alarme propre à émettre une alarme sonore au pilote, par exemple lorsque la position d'arrêt estimée de l'aéronef est située au-delà de la position du seuil de piste 22.

Dans une variante, le système 10 recueille des informations dans le système avionique 32 et/ou dans les bases de données 58 pour déterminer des paramètres supplémentaires influençant les performances de freinage de l'avion, tel que le fonctionnement des systèmes avion, en particulier du système de freinage, et/ou le fonctionnement et la configuration des éléments de sustentation.

Dans une autre variante, lorsque l'approche vers la piste d'atterrissage 18 n'est pas rectiligne, le système 10 est apte à modéliser la position du point d'arrêt 16, sur la base d'une estimation de la projection courbe de la trajectoire d'approche sur le plan horizontal.

Dans encore une autre variante, le système 10 tient compte de l'environnement de l'aéronef 12, et notamment du relief présent sur le terrain 14, en particulier pour corriger la hauteur courante H(t) mesurée et la ramener à la hauteur par rapport au seuil de piste 20.

Dans une autre variante, le système 10 comprend des moyens d'estimation en temps réel de l'opportunité pour le pilote de l'aéronef 12 de faire une manoeuvre de remise des gaz, sur la base de la position du point d'arrêt 16 déterminé.

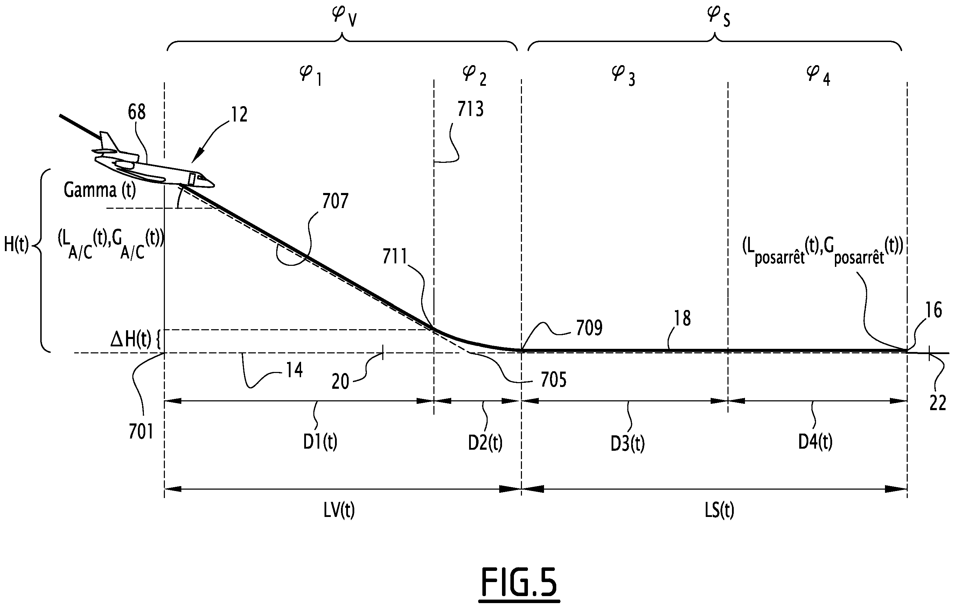

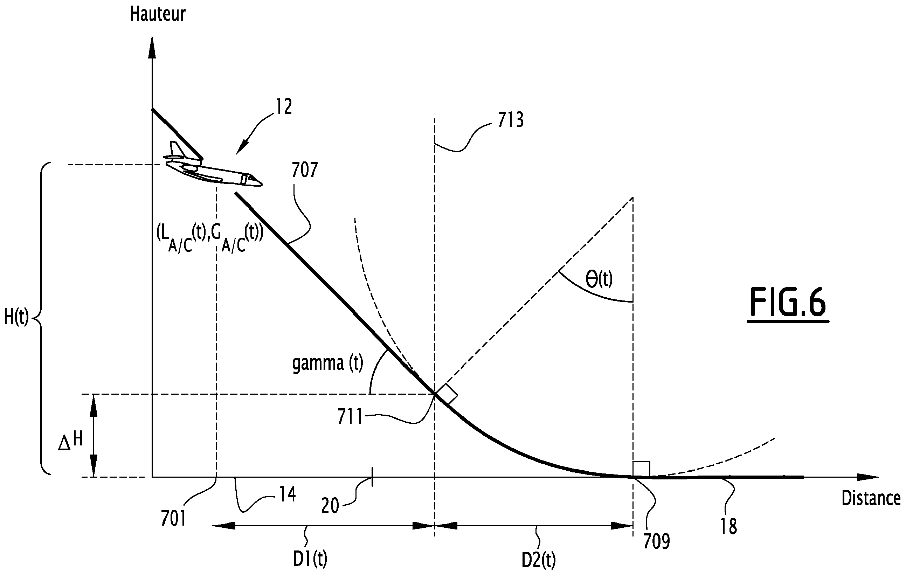

Un autre mode de réalisation de l'invention est illustré sur les figures 5 et 6.

Dans ce mode de réalisation, les moyens d'estimation 70 estiment une première distance D1(t) correspondant à la distance séparant le projection 701 sur le terrain 14 de l'aéronef en vol et le plan vertical 713 passant par le point 711 de la trajectoire de l'aéronef où celui-ci amorce la phase d'arrondi $\varphi_2$. Les moyens d'estimation 72 estiment une deuxième distance D2(t) correspondant à la distance séparant le plan vertical 713 du point de toucher des roues 709 de l'aéronef sur le terrain 14.

Dans ce mode de réalisation, la distance D1(t) est représentative de la phase d'approche $\varphi_1$ tandis que D2(t) est représentative de toute la phase d'arrondi $\varphi_2$.

Pour ce faire, les moyens d'estimation 70 sont propres à calculer une hauteur $\Delta H(t)$ par rapport à la hauteur du seuil de piste 20 à partir de laquelle l'arrondi sera effectué.

La hauteur ΔH(t) est calculée en fonction de la vitesse sol courante $V_{sol}(t)$, de la pente avion courante gamma(t), et du facteur de charge $n_{zarr}$ de l'aéronef 12, obtenu à partir de la base de données de performances 58, et de l'accélération de la pesanteur g, par exemple par l'équation (12) ci-dessous :

$$\Delta H(t) = \int_{gamma(t)-\beta}^{0} \frac{V_{sol}(t)^2}{g} \cdot \frac{1}{n_{z\,arr} - \cos(\gamma)} \cdot \sin(\gamma) \cdot d\gamma \ (12)$$

La distance D1 (t) est ensuite calculée par l'équation suivante :

$$D1(t) = \frac{h(t) - \Delta H}{gamma(t)} \ (13)$$

La distance D1 (t) est écrêtée inférieurement par 0, pour assurer D1 (t)=0 pendant l'arrondi.

Ensuite, la distance D2(t) prenant en compte l'arrondi est calculée à chaque instant en fonction de la hauteur ΔH(t) par l'équation suivante :

$$D2(t) = \sqrt{\left[ 2 \cdot \frac{V_{sol}(t)^2}{g} \cdot \frac{1}{n_{z\,arr} - \cos(gamma(t))} \cdot \sin\left( \frac{gamma(t)}{2} \right) \right]^2 - [\Delta H]^2} \ , (14)$$

soit

$$D2(t) = \sqrt{\left[ 2 \cdot \frac{V_{sol}(t)^2}{g} \cdot \frac{1}{n_{z\,arr} - \cos(gamma(t))} \cdot \sin\left( \frac{gamma(t)}{2} \right) \right]^2 - \left[ \int_{gamma(t)-\beta}^{0} \frac{V_{sol}(t)^2}{g} \cdot \frac{1}{n_{z\,arr} - \cos(\gamma)} \cdot \sin(\gamma) \cdot d\gamma \right]^2}$$

(15)

Les formules de calcul de D3(t) et D4(t) ainsi que de la position d'arrêt restent elles inchangées par rapport au mode de réalisation décrit précédemment.

## Revendications

1. Procédé de détermination dynamique de la position du point d'arrêt (16) d'un aéronef (12) sur un terrain (14), mis en oeuvre par un système (10) de détermination dynamique de la position du point d'arrêt, le procédé comprenant les étapes suivantes :

   - mesure (100) dynamique de la position géographique courante de l'aéronef (12), et de sa vitesse sol courante ;
   - calcul (102) d'une première longueur (LV(t)) représentative d'une phase de vol de l'aéronef (12), et calcul (104) d'une deuxième longueur (LS(t)) représentative d'une phase au sol de l'aéronef (12), le calcul de la première longueur (LV(t)) comprenant une phase (112) d'estimation dynamique d'une distance (D2(t)) parcourue par l'aéronef (12) lors d'au moins une partie d'une phase d'arrondi de l'aéronef (12) ;
   - calcul (106) de la position du point d'arrêt (16) sur la base de la première longueur (LV(t)), de la deuxième longueur (LS(t)), le calcul de la position du point d'arrêt s'effectuant en outre sur la base de la position géographique courante, **caractérisé en ce que** l'étape (106) de calcul du point d'arrêt (16) comporte la détermination de la position géographique du point d'arrêt (16) sur la base de la position géographique courante de l'aéronef (12), de la première longueur (LV(t)), de la deuxième longueur (LS(t)), et d'un relèvement ($_X$(t)) correspondant à la route sol de l'aéronef (12), définie par l'angle formé par le vecteur vitesse sol de l'aéronef avec le nord géographique.

**2.** Procédé selon la revendication 1, **caractérisé en ce qu'**il comporte une étape (100) de mesure de la pente courante de l'aéronef (12), la distance (D2(t)) parcourue par l'aéronef (12) lors d'au moins une partie d'une phase d'arrondi de l'aéronef (12) étant calculée en fonction de la pente courante de l'aéronef (12).

**3.** Procédé selon l'une des revendications 1 ou 2, **caractérisé en ce que**, lors de la phase d'estimation (112), la distance (D2(t)) parcourue par l'aéronef (12) lors d'au moins une partie d'une phase d'arrondi de l'aéronef (12) est estimée en fonction de la vitesse sol courante de l'aéronef, mesurée lors d'une étape de mesure (100).

**4.** Procédé selon l'une quelconque des revendications 1 à 3, **caractérisé en ce que**, lors de la phase d'estimation (112), la distance (D2(t)) parcourue par l'aéronef (12) lors d'au moins une partie d'une phase d'arrondi de l'aéronef (12) est estimée en fonction du facteur de charge $n_{zarr}$ de l'aéronef (12), estimé durant son arrondi.

**5.** Procédé selon les revendications 2 à 4, **caractérisé en ce que**, lors de la phase d'estimation (112), la distance (D2(t)) parcourue par l'aéronef (12) lors d'au moins une partie d'une phase d'arrondi de l'aéronef (12) est estimée par l'équation:

$$D2(t) = \int_0^{gamma(t)-\beta} \left[ \frac{1}{g \times (n_{zarr} - \cos(\gamma))} \times V_{sol}^2(t) \times \cos\left(\gamma + \frac{d\gamma}{2}\right) \right] \cdot d\gamma$$

où g est l'accélération de la pesanteur, $\beta$ est la pente du terrain (14), $n_{zarr}$ est le facteur de charge de l'aéronef (12) estimé durant l'arrondi, $V_{sol}(t)$ est la vitesse sol courante de l'aéronef (12), et gamma(t) est la pente courante de l'aéronef (12).

**6.** Procédé selon l'une quelconque des revendications 2 à 4, **caractérisé en ce que** la phase d'estimation (112) comporte le calcul d'une hauteur estimée ($\Delta H$) de l'aéronef (12) à laquelle démarre l'arrondi, la distance (D2(t)) parcourue par l'aéronef (12) lors d'au moins une partie d'une phase d'arrondi de l'aéronef (12) étant calculée à partir de la hauteur estimée ($\Delta H$).

**7.** Procédé selon l'une quelconque des revendications précédentes, **caractérisé en ce que** le calcul de la première longueur (LV(t)) comporte une phase (110) d'estimation d'une distance (D1(t)) parcourue lors de l'approche de l'aéronef (12) vers le terrain (14) avant l'arrondi et/ou lors d'une première partie de la phase d'arrondi de l'aéronef (12), la distance (D1(t)) parcourue lors de l'approche de l'aéronef (12) vers le terrain (14) avant l'arrondi et/ou lors d'une première partie de la phase d'arrondi de l'aéronef (12) étant calculée en fonction de la pente courante mesurée de l'aéronef (12), et avantageusement, en fonction de la hauteur courante de l'aéronef (12) par rapport au terrain (14).

**8.** Procédé selon l'une quelconque des revendications précédentes, **caractérisé en ce que** l'étape (104) de calcul de la deuxième longueur (LS(t)) comporte une phase (114) de calcul d'une distance (D3(t)) représentative du passage de la décélération courante à la décélération correspondant à un freinage établi de l'aéronef (12), en fonction de la décélération courante.

**9.** Procédé selon la revendication 8, **caractérisé en ce que** la distance représentative du passage de la décélération courante à la décélération correspondant au freinage établi est calculée en fonction d'une constante $K_{ms}$ représentative de la dynamique de l'aéronef (12) entre le toucher du train principal et l'établissement du freinage établi.

**10.** Procédé selon l'une quelconque des revendications précédentes, **caractérisé en ce que** l'étape de calcul (104) de la deuxième longueur (LS(t)) comporte une phase (116) de calcul d'une distance (D4(t)) de freinage à partir d'un profil ($J_{x\,tab}$) de décélération prédéterminé de l'aéronef (12) sur le terrain (14), en fonction de la vitesse sol courante.

**11.** Procédé selon la revendication 10, **caractérisé en ce que** le profil de décélération prédéterminé ($J_{x\,tab}$) est une décélération constante.

**12.** Système (10) de détermination dynamique de la position du point d'arrêt (16) d'un aéronef (12) sur un terrain (14), comprenant :

    - un ensemble (30) de mesure dynamique de la position géographique courante de l'aéronef (12), et de sa vitesse sol courante,.;

- un ensemble (52) de calcul d'une première longueur (LV(t)) représentative d'une phase de vol de l'aéronef (12), et un ensemble (54) de calcul d'une deuxième longueur (LS(t)) représentative d'une phase au sol de l'aéronef (12), l'ensemble de calcul (52) de la première longueur (LV(t)) comprenant des moyens (72) d'estimation d'une distance (D2(t)) parcourue par l'aéronef (12) lors d'au moins une partie d'une phase d'arrondi de l'aéronef (12) ;

- un ensemble (56) de calcul de la position du point d'arrêt (16) sur la base de la première longueur (LV(t)), de la deuxième longueur (LS(t)), l'ensemble de calcul de la position du point d'arrêt (16) étant apte à calculer ladite position sur la base de la position géographique courante de l'aéronef, **caractérisé en ce que** l'ensemble de calcul du point d'arrêt (16) est apte à déterminer la position géographique du point d'arrêt (16) sur la base de la position géographique courante de l'aéronef (12), de la première longueur (LV(t)), de la deuxième longueur (LS(t)) et d'un relèvement (X(t)) correspondant à la route sol de l'aéronef (12), définie par l'angle formé par le vecteur vitesse sol de l'aéronef avec le nord géographique.

**13.** Système (10) selon la revendication 12, **caractérisé en ce qu'**il comporte un ensemble (64) de mesure de la pente courante de l'aéronef (12), les moyens d'estimation (72) étant propres à calculer la distance (D2(t)) parcourue par l'aéronef (12) lors d'au moins une partie d'une phase d'arrondi de l'aéronef (12) en fonction de la pente courante de l'aéronef (12).

**Patentansprüche**

**1.** Verfahren zur dynamischen Ermittlung der Position des Stopp-Punkts (16) eines Luftfahrzeugs (12) auf einem Boden (14), durchgeführt durch ein System (10) zur dynamischen Ermittlung der Position des Stopp-Punkts, das verbunden ist mit einem System (30) zur Positionsbestimmung und Messung, und aufweisend die folgenden Schritte:

- dynamisches Messen (100) der aktuellen geografischen Position des Luftfahrzeugs (12) und dessen aktueller Geschwindigkeit über Grund,
- Berechnen (102) einer ersten Länge (LV(t)), die repräsentativ ist für eine Flugphase des Luftfahrzeugs (12), und Berechnen (104) einer zweiten Länge (LS(t)), die repräsentativ ist für eine Boden-Phase des Luftfahrzeugs (12), wobei das Berechnen der ersten Länge (LV(t)) aufweist eine Phase (112) zur dynamischen Abschätzung einer Distanz (D2(t)), die von dem Luftfahrzeug (12) durchlaufen wird während wenigstens eines Teils einer Anflugbogenphase des Luftfahrzeugs (12),
- Berechnen (106) der Position des Stopp-Punkts (16) auf der Basis der ersten Länge (LV(t)) und der zweiten Länge (LS(t)), wobei das Berechnen der Position des Stopp-Punkts ferner erfolgt auf der Basis der aktuellen geografischen Position, **dadurch gekennzeichnet, dass**

der Schritt (106) des Berechnens des Stopp-Punkts (16) aufweist das Ermitteln der geografischen Position des Stopp-Punkts (16) auf der Basis der aktuellen geografischen Position des Luftfahrzeugs (12), der ersten Länge (LV(t)), der zweiten Länge (LS(t)) und einer Peilung (X(t)), die zu der Route des Luftfahrzeugs (12) korrespondiert und definiert ist durch den Winkel, der durch die aktuelle Geschwindigkeit über Grund mit dem geografischen Norden gebildet ist.

**2.** Verfahren gemäß Anspruch 1, **dadurch gekennzeichnet, dass** es aufweist einen Schritt (100) des Messens der aktuellen Neigung des Luftfahrzeugs (12), wobei die Distanz (D2(t)), die von dem Luftfahrzeug (12) während wenigstens eines Teils einer Anflugbogenphase des Luftfahrzeugs (12) durchlaufen wird, berechnet wird in Abhängigkeit von der aktuellen Neigung des Luftfahrzeugs (12).

**3.** Verfahren gemäß einem der Ansprüche 1 oder 2, **dadurch gekennzeichnet, dass** während der Abschätzungsphase (112) die Distanz (D2(t)), die von dem Luftfahrzeug (12) während wenigstens eines Teils einer Anflugbogenphase des Luftfahrzeugs (12) durchlaufen wird, abgeschätzt wird in Abhängigkeit von der aktuellen Geschwindigkeit über Grund des Luftfahrzeugs, die während des Schritts des Messens (100) gemessen wird.

**4.** Verfahren gemäß irgendeinem der Ansprüche 1 bis 3, **dadurch gekennzeichnet, dass** während der Abschätzungsphase (112) die Distanz (D2(t)), die von dem Luftfahrzeug (12) während zumindest eines Teils einer Anflugbogenphase des Luftfahrzeugs (12) durchlaufen wird, abgeschätzt wird in Abhängigkeit von einem Last-Faktor $n_{zarr}$ des Luftfahrzeugs (12), der während dessen Anflugbogens abgeschätzt wird.

**5.** Verfahren gemäß den Ansprüchen 2 bis 4, **dadurch gekennzeichnet, dass** während der Abschätz-Phase (112) die Distanz (D2(t)), die von dem Luftfahrzeug (12) während zumindest eines Teils einer Anflugbogenphase des Luftfahrzeugs (12) durchlaufen wird, abgeschätzt wird durch die Gleichung:

$$\Delta H(t) = \int_{gamma(t)-\beta}^{0} \frac{V_{sol}(t)^2}{g} \cdot \frac{1}{n_{z\,arr} - \cos(\gamma)} \cdot \sin(\gamma) \cdot d\gamma$$

wobei g die Schwerebeschleunigung ist, β die Neigung des Bodens (14) ist, $n_{zarr}$ der Last-Faktor des Luftfahrzeugs (12) ist, der während des Anflugbogens geschätzt wird, $V_{sol}(t)$ die aktuelle Geschwindigkeit über Grund des Luftfahrzeugs (12) ist, und gamma(t) die aktuelle Neigung des Luftfahrzeugs (12) ist.

6. Verfahren gemäß irgendeinem der Ansprüche 2 bis 4, **dadurch gekennzeichnet, dass** die Abschätzungsphase (112) aufweist das Berechnen einer geschätzten Höhe (ΔH) des Luftfahrzeugs (12), bei welcher der Anflugbogen beginnt, wobei die Distanz (D2(t)), die von dem Luftfahrzeug (12) durchlaufen wird während wenigstens eines Teils einer Anflugbogenphase des Luftfahrzeugs (12) berechnet wird ausgehend von der geschätzten Höhe (ΔH).

7. Verfahren gemäß irgendeinem der vorhergehenden Ansprüche, **dadurch gekennzeichnet, dass** das Berechnen der ersten Länge (LV(t)) aufweist eine Phase (110) des Abschätzens einer Distanz (D1(t)), die während des Anflugs des Luftfahrzeugs (12) zu dem Boden (14) hin vor dem Anflugbogen und/oder während eines ersten Teils der Anflugbogenphase des Luftfahrzeugs (12) durchlaufen wird, wobei die Distanz (D1(t)), die während des Anflugs des Luftfahrzeugs (12) zu dem Boden (14) hin vor dem Anflugbogen und/oder während eines ersten Teils der Anflugbogenphase des Luftfahrzeugs (12) durchlaufen wird, berechnet wird in Abhängigkeit von der gemessenen aktuellen Neigung des Luftfahrzeugs (12), und vorteilhafterweise in Abhängigkeit von der aktuellen Höhe des Luftfahrzeugs (12) bezüglich des Bodens (14).

8. Verfahren gemäß irgendeinem der vorhergehenden Ansprüche, **dadurch gekennzeichnet, dass** der Schritt (104) des Berechnens der zweiten Länge (LS(t)) aufweist eine Phase (114) des Berechnens einer Distanz (D3(t)), die repräsentativ ist für den Übergang von der gängigen Verzögerung zur Verzögerung, die zu einem von dem Luftfahrzeug hergestellten Bremsen korrespondiert, in Abhängigkeit von der gängigen Verzögerung.

9. Verfahren gemäß Anspruch 8, **dadurch gekennzeichnet, dass** die Distanz, die repräsentativ ist für den Übergang von der gängigen Verzögerung zur Verzögerung, die zu dem Bremsen korrespondiert, berechnet wird in Abhängigkeit von einer Konstanten $K_{ms}$, die repräsentativ ist für die Dynamik des Luftfahrzeugs (12) zwischen der Berührung des Hauptfahrwerks und der Herstellung des hergestellten Bremsens.

10. Verfahren gemäß irgendeinem der vorhergehenden Ansprüche, **dadurch gekennzeichnet, dass** der Schritt des Berechnens (104) der zweiten Länge (LS(t)) aufweist eine Phase (116) des Berechnens einer Distanz (D4(t)) des Bremsens ausgehend von einem vorbestimmten Profil ($J_{x\,tab}$) der Verzögerung des Luftfahrzeugs (12) auf dem Boden (14) in Abhängigkeit von der aktuellen Geschwindigkeit über Grund.

11. Verfahren gemäß Anspruch 10, **dadurch gekennzeichnet, dass** das vorbestimmte Profil der Verzögerung ($J_{x\,tab}$) eine konstante Verzögerung ist.

12. System (10) zur dynamischen Ermittlung der Position des Stopp-Punkts (16) eines Luftfahrzeugs (12) auf dem Boden (14), aufweisend:

    - eine Einrichtung (30) zum dynamischen Messen der aktuellen geografischen Position des Luftfahrzeugs (12) und dessen aktueller Geschwindigkeit über Grund, wobei die Einrichtung zum Berechnen (52) der ersten Länge (LV(t)) aufweist Mittel (72) zur Abschätzung einer Distanz (D2(t)), die von dem Luftfahrzeug (12) durchlaufen wird während wenigstens eines Teils einer Anflugbogenphase des Luftfahrzeugs (12),
    - eine Einrichtung (52) zum Berechnen einer ersten Länge (LV(t)), die repräsentativ ist für eine Flugphase des Luftfahrzeugs (12), und eine Einrichtung (54) zum Berechnen einer zweiten Länge (LS(t)), die repräsentativ ist für eine Boden-Phase des Luftfahrzeugs (12),
    - eine Einrichtung (56) zum Berechnen der Position des Stopp-Punkts (16) auf der Basis der ersten Länge (LV(t)) und der zweiten Länge (LS(t)), wobei die Einrichtung zum Berechnen der Position des Stopp-Punkts (16) imstande ist, die besagte Position auf der Basis der aktuellen geografischen Position des Luftfahrzeugs zu berechnen, **dadurch gekennzeichnet, dass** die Einrichtung zum Berechnen des Stopp-Punkts (16) imstande ist, die geografische Position des Stopp-Punkts (18) auf der Basis der aktuellen geografischen Position des Luftfahrzeugs (12), der ersten Länge (LV(t)), der zweiten Länge (LS(t)) und einer Peilung (X(t)) zu ermitteln, die zu der Route des Luftfahrzeugs (12) korrespondiert und definiert ist durch den Winkel, der durch die aktuelle Geschwindigkeit über Grund mit dem geografischen Norden gebildet ist.

13. System (10) gemäß Anspruch 12, **dadurch gekennzeichnet, dass** es aufweist eine Einrichtung (64) zum Messen der aktuellen Neigung des Luftfahrzeugs (12), wobei die Mittel zur Abschätzung (72) imstande sind, die Distanz (D2(t)), die von dem Luftfahrzeug (12) während wenigstens eines Teils einer Anflugbogenphase des Luftfahrzeugs (12) durchlaufen wird, zu berechnen in Abhängigkeit von der aktuellen Neigung des Luftfahrzeugs (12).


**Claims**

1. A method for dynamically determining the position of the stop point (16) of an aircraft (12) on a terrain (14), carried out by a system for dynamically determining the position of the stop point, the method comprising the following steps:

   - dynamic measurement (100) of the current geographical position of the aircraft (12), and its current ground speed;
   - calculation (102) of a first length (LV(t)) representative of a flight phase of the aircraft (12), and calculation (104) of a second length (LS(t)) representative of a ground phase of the aircraft (12), the calculation of the first length (LV(t)) comprising a phase (112) for dynamically estimating a distance (D2(t)) traveled by the aircraft (12) during at least part of a flare phase of the aircraft (12);
   - calculation (106) of the position of the stop point (16) based on the first length (LV(t)), the second length (LS(t)) the calculation of the stop point position being done additionally based on the current geographical position;

   **characterized in that** the step (106) for calculating the stop point (16) includes determining the geographical position of the stop point (16) based on the current geographical position of the aircraft (12), the first length (LV(t)), the second length (LS(t)), and a bearing (X(t)) corresponding to the ground route of the aircraft (12), defined by the angle formed by the ground speed vector of the aircraft with geographic north.

2. The method according to claim 1, **characterized in that** it comprises a step (100) for measuring the current slope of the aircraft (12), the distance (D2(t)) traveled by the aircraft (12) during at least part of a flare phase of the aircraft (12) being calculated as a function of the current slope of the aircraft (12).

3. The method according to one of claims 1 or 2, **characterized in that**, during the estimation phase (112), the distance (D2(t)) traveled by the aircraft (12) during at least part of the flare phase of the aircraft (12) is estimated as a function of the current ground speed of the aircraft, measured during the measuring step (100).

4. The method according to any one of claims 1 to 3, **characterized in that**, during the estimation phase (112), the distance (D2(t)) traveled by the aircraft (12) during at least part of the flare phase of the aircraft (12) is estimated as a function of the load factor $n_{zarr}$ of the aircraft (12), estimated during flare thereof

5. The method according to claims 2 to 4, **characterized in that**, during the estimation phase (112), the distance (D2(t)) traveled by the aircraft (12) during at least part of a flare phase of the aircraft (12) is estimated using the equation:

$$D2(t) = \int_0^{gamma(t)-\beta}\left[\frac{1}{g\times(n_{zarr}-\cos(\gamma))}\times V_{sol}^2(t)\times\cos\left(\gamma+\frac{d\gamma}{2}\right)\right]\cdot d\gamma$$

where g is the acceleration of gravity, β is the slope of the terrain (14), $n_{zarr}$ is the load factor of the aircraft (12) estimated during flare, $V_{sol}(t)$ is the current ground speed of the aircraft (12), and gamma(t) is the current slope of the aircraft (12).

6. The method according to any one of claims 2 to 4, **characterized in that** the estimating phase (112) includes calculating an estimated height (ΔH) of the aircraft (12) at which flare begins, the distance (D2(t)) traveled by the aircraft (12) during at least part of a flare phase of the aircraft (12) being calculated from the estimated height ($\Delta$H).

7. The method according to any one of the preceding claims, **characterized in that** the calculation of the first length (LV(t)) includes a phase (110) for estimating a distance (D1(t)) traveled during the approach of the aircraft (12) toward the terrain (14) before flare and/or during a first part of the flare phase of the aircraft (12), the distance (D1(t)) traveled during the approach of the aircraft (12) toward the terrain (14) before flare and/or during the first part of the flare phase of the aircraft (12) being calculated as a function of the current measured slope of the aircraft, and advantageously, as a function of the current height of the aircraft (12) relative to the terrain (14).

8. The method according to any one of the preceding claims, **characterized in that** the step (104) for calculating the second length (LS(t)) includes a phase (114) for calculating a distance (D3(t)) representative of the transition from the current deceleration to the deceleration corresponding to an established braking of the aircraft (12), as a function of the current deceleration.

9. The method according to claim 8, **characterized in that** the distance representative of the transition from the current deceleration to the deceleration corresponding to the established braking is calculated as a function of a constant $K_{ms}$ representative of the dynamics of the aircraft (12) between touchdown of the main landing gear and the establishment of the established braking.

10. The method according to any one of the preceding claims, **characterized in that** the step (104) for calculating the second length (LS(t)) includes a phase (116) for calculating a braking distance (D4(t)) from a predetermined deceleration profile ($J_{x\ tab}$) of the aircraft (12) on the terrain (14), as a function of the current ground speed.

11. The method according to claim 10, **characterized in that** the predetermined deceleration profile ($J_{x\ tab}$) is a constant deceleration.

12. A system (10) for dynamically determining the position of the stop point (16) of an aircraft (12) on a terrain (14), comprising:

   - a unit (30) for dynamically measuring the current geographical position of the aircraft (12) and its current ground speed;
   - a unit (52) for calculating a first length (LV(t)) representative of a flight phase of the aircraft (12), and a unit (54) for calculating a second length (LS(t)) representative of a ground phase of the aircraft (12) the unit (52) for calculating the first length (LV(t)) comprising means (72) for estimating a distance (D2(t)) traveled by the aircraft (12) during at least part of a flare phase of the aircraft (12)
   - a unit (56) for calculating the position of the stop point (16) based on the first length (LV(t)), the second length (LS(t)), the unit for calculating the stop point position (16) being able to calculate said position based on the current geographical position of the aircraft;

   **characterized in that** the unit for calculating the stop point (16) is able to determine the geographical position of the stop point (16) based on the current geographical position of the aircraft (12), the first length (LV(t)), the second length (LS(t)), and a bearing ($_{X}$(t)) corresponding to the ground route of the aircraft (12), defined by the angle formed by the ground speed vector of the aircraft with geographic north.

13. The system (10) according to claim 12, **characterized in that** it includes a unit (64) for measuring the current slope of the aircraft (12), the estimating means (72) being capable of calculating the distance (D2(t)) traveled by the aircraft (12) during at least part of a flare phase of the aircraft (12) as a function of the current slope of the aircraft (12).

FIG.1

EP 2 735 931 B1

FIG.2

FIG.3

## FIG.4

**FIG.5**

**FIG.6**

**RÉFÉRENCES CITÉES DANS LA DESCRIPTION**

**Documents brevets cités dans la description**

- FR 2903801
- FR 2897593
- US 20010052562 A